(19) **Europäisches Patentamt European Patent Office Office européen des brevets**

(11) **EP 4 467 452 B1**

(12) **EUROPEAN PATENT SPECIFICATION**

(45) Date of publication and mention
of the grant of the patent:
**08.10.2025 Bulletin 2025/41**

(21) Application number: **23382496.0**

(22) Date of filing: **26.05.2023**

(51) International Patent Classification (IPC):
**B64D 1/08** (2006.01)      **B64D 17/00** (2006.01)
**G05D 1/617** (2024.01)      **G05D 1/656** (2024.01)
**G05D 107/30** (2024.01)     **B64D 1/12** (2006.01)
**G05D 101/10** (2024.01)

(52) Cooperative Patent Classification (CPC):
**B64D 1/12; B64D 1/08; B64D 17/00; G05D 1/618;
G05D 1/665;** G05D 2101/10; G05D 2105/20;
G05D 2107/30; G05D 2109/22; G05D 2109/27

(54) **METHOD AND SYSTEM OF AERIAL DELIVERY BY PARACHUTE FROM AN AIRCRAFT**

VERFAHREN UND SYSTEM ZUR LUFTABLIEFERUNG DURCH FALLSCHIRM VON EINEM
FLUGZEUG AUS

PROCÉDÉ ET SYSTÈME DE LIVRAISON AÉRIENNE PAR PARACHUTE À PARTIR D'UN
AÉRONEF

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**27.11.2024 Bulletin 2024/48**

(73) Proprietor: **Airbus Defence and Space, S.A.U.
28906 Getafe - Madrid (ES)**

(72) Inventors:
• **Bullido Rodriguez, Jorge**
**Getafe (ES)**
• **Angel Blasco, Emilio Javier**
**Getafe (ES)**
• **Raya Morales, Rubén**
**Getafe (ES)**
• **López Herrero, Israel**
**Getafe (ES)**
• **Fernández Riera, Jorge**
**Getafe (ES)**

(74) Representative: **Elzaburu S.L.P.
Edificio Torre de Cristal
Paseo de la Castellana 259 C, planta 28
28046 Madrid (ES)**

(56) References cited:
**CN-A- 116 050 080     US-B1- 10 384 780**

• **MARISCAL-SANCHEZ F-JAVIER ET AL:
"Computer Simulation of Paratrooper
Deployment by Static Line from A400M", EADS
CASA, 1 October 2006 (2006-10-01), pages 1 - 22,
XP093091942, Retrieved from the Internet
<URL:https://www.sto.nato.int/publications/STO
%20Meeting%20Proceedings/RTO-MP-AVT-133/
MP-AVT-133-03.pdf> [retrieved on 20231016]**
• **GHOREYSHI MEHDI ET AL: "A paratrooper
model sensitivity analysis for personnel
airdrop", AEROSPACE SCIENCE AND
TECHNOLOGY, ELSEVIER MASSON, FR, vol.
122, 1 February 2022 (2022-02-01), XP086986916,
ISSN: 1270-9638, [retrieved on 20220201], DOI:
10.1016/J.AST.2022.107391**
• **LI YANJUN ET AL: "Modelling of Parachute
Airborne Clusters Flight Dynamics and
Parachute Interactions", AEROSPACE, vol. 10,
no. 1, 4 January 2023 (2023-01-04), pages 51,
XP093091935, DOI: 10.3390/aerospace10010051**
• **WUEST M R ET AL: "Precision airdrop = Largage
de précision", vol. 24, 1 December 2005
(2005-12-01), pages 1 - 62, XP002541716, ISBN:
978-92-837-1153-7, Retrieved from the Internet
<URL:http://www.rta.nato.int/Pubs/RDP.asp?
RDP=RTO-AG-300-V24> [retrieved on 20090817]**

**Description**

**Field of the invention**

The invention relates to the field of aerial delivery by parachute from an aircraft.

**Background of the invention**

The phenomenon of paratroopers' crossover is a non-beneficial effect in aerial delivery in which an element, a load, or a paratrooper, delivered or dropped from the left side of the aircraft tends to move to the right side after jump or drop, and vice versa. There is a potential risk of an interaction in the air between the load or paratrooper or their parachutes when doing simultaneous dispatch operations. This hazard is due to something called "Wide-body Centrelining" that refers to the aerodynamic flow around the fuselage of an aircraft and its tendency to move towards the longitudinal centerline once the aircraft has gone by.

The term centrelining is understood in this document as the tendency that can be experienced by an element dropped from an aircraft, a paratrooper or a load, when jumping or expelled from a side door, by which the paratrooper or the load is displaced inwards toward the aircraft plane of symmetry, i.e., the aircraft centerline.

The term crossover is understood in this document as the phenomenon in which a pair of elements, paratroopers or loads, dispatched from opposite side doors crosses each other in the Y-direction perpendicular to the direction of the ground speed of the aircraft.

The crossover phenomenon was investigated in the past by several nations when clearing the Paratroopers Simultaneous Dispatch capability on different aircraft.

At the early stages of the wide-body transport aircrafts, i.e., for the C-160 Transall or the Lockheed C-141 Starlifter, where the Simultaneous Dispatch capability became more feasible, the analysis of the crossover phenomenon was based on visual and qualitative assessments made by expert people after gathering evidence during Flight Testing.

At the end of the 20's century, beginning of 21's, during the investigations performed for the C-17 and the C-141 aircraft, the following methodology of analysis was developed by the United States:

- **S-Curve Method:** Used by the United States Air Force (USAF) in the C-17 and the C-141 aircraft when demonstrating that the level of centrelining on the C-17 aircraft was similar to the C-141 aircraft that was an aircraft already in use and with a risk considered acceptable. The method basically consists of the calculation of the cumulative distribution function of the minimum distances between a characteristic point of the 3D trajectories of the paratrooper + parachute systems (called "Centroid") when simulating simultaneous jumps between pairs of paratroopers.

Despite of several methodologies of analysis were developed in the past, all of them were based on qualitative evaluations or on the analysis of a specific element of the system, i.e., the centroid in the S-curves method. The following document discloses a Computer Simulation of Paratrooper Deployment by Static Line from A400M", EADS CASA, (dated 2006-10-01).

In addition, such methodologies were developed with the main objective of comparing the results from the aircraft, or parachute, under study with the results of a reference aircraft, parachute, where the risk was already considered acceptable, but there was no universal acceptance on what metric and methodology is more appropriate to better characterize the phenomenon and evaluate its severity.

**Summary of the invention**

The method and system object of this invention allows the evaluation of the paratroopers' or loads crossover phenomenon which is a risk common to all military transport aircrafts performing such type of operations.

The method of aerial delivery by parachute from an aircraft object of the invention comprises the following steps:

- tracking and recording by a tracking equipment element, load or paratrooper, trajectories at several instants of a sample of elements, delivered by parachute from the left side and from the right side of the aircraft,

- simulating in a computer means pairs of the delivered trajectories from the recorded sample dispatched simultaneously from the left side and the right side of the aircraft,

- defining in the computer means at each instant of the trajectory a delivered volume comprising the shape of the delivered element located over the trajectory, the parachute comprising a canopy and suspensions lines extending between the canopy and the delivered element. Define is understood as marking out over the trajectory the boundaries or limits of the shape of a volume formed by the delivered element, the parachute and the suspension lines. Volume is understood as the amount of space that the delivered element, the parachute and the suspension lines occupy in three-dimensional space,

- measuring in the computer means at each instant of each trajectory the distance between the two defined volumes of the element trajectories (2) from the left side and the right side of the aircraft,

- identifying the number of cases where the defined volumes intersected each other or a minimum distance between the defined volumes is smaller than a threshold compared to the total number of cases of a given representative sample of trajectories:

$$\% \, of \, Interactions = \frac{Pairs \, With \, Interactions}{Total \, Pairs} \cdot 100$$

- the computer means providing a risk of interaction of aerial delivery by parachute from an aircraft by the number of intersections identified over the number of cases of the given representative sample of trajectories.

According to the above, the method object of the invention is based on the evaluation of the probability of having an interaction between any part of the system formed by the paratrooper or load and the parachute when analyzing pairs of trajectories of paratroopers or loads dispatched from the two aircraft side doors.
Such probability is obtained by simulating simultaneous drops and identifying the number of cases where the minimum distance between the elements being considered, the whole system or just part of it, is smaller than a predefined threshold, for instance 0 meter, compared to the total number of cases of a given representative sample of trajectories.

$$\% \, of \, Interactions = \frac{Pairs \, With \, Interactions}{Total \, Pairs} \cdot 100$$

This method uses as inputs the trajectories of real jumps or drops performed from both sides of the aircraft at desired conditions and tracking the position of the elements, paratroopers or loads, at each instant by means of appropriate tracking equipment. The tracking equipment may be, for instance,
kine-theodolites located on ground or position devices installed on the element or cameras located on the aircraft. For instance, devices installed on the paratroopers, like a GPS, dedicated cameras properly installed and calibrated on the aircraft, etc.
Once a representative sample of trajectories is available, the analysis process can be described as follows according to the above:

1) System Volume definition. In an embodiment, for each of the performed jumps or drops the trajectories with the volume defined by the position of the body of the paratrooper or the load, the center of the canopy parachute (APEX) and the radius of the parachute at each instant is identified.
During the initial moments after the delivery until the parachute is fully released from the deployment bag and starts to inflate, only the trajectory of the body of the paratrooper or of the load can be tracked, thus the volume during such initial phase is reduced to the volume of the body of the paratrooper or the volume of the load. Once the parachute is released from the bag and starts to inflate, a proper volume with an "ice cream" shape can be defined.

2) Interactions Computation: Once two test points meet the defined comparison criteria, exits from opposite doors of the aircraft spaced in time shall be simulated and the distance between any part of the delivered volume released from the left side and from the right side of the aircraft shall be measured at each instant.

3) If at any time the volumes intersect each other or came within the considered threshold, an interaction shall be declared for such pair of trajectories. Otherwise, no interaction shall be considered.

4) Once all pairs of comparable trajectories are analyzed, the percentage of interactions in such conditions can be obtained as follows:

$$\% \, of \, Interactions = \frac{Pairs \, With \, Interactions}{Total \, Pairs} \cdot 100$$

This percentage can be obtained for the complete paratrooper or load volume or between any element of its components: delivered element, paratrooper or static lines.

This method can be used to analyze the risk of interaction between elements, paratroopers or loads in the air, and/or their parachutes, when getting the clearance for the use of a certain parachute type on a certain aircraft.

Different from the analysis methodologies used in the past in some aircrafts (like the C-17 or the C-130), the claimed invention develops a method based on the measurement of the distance between any part of the paratrooper or load system volumes, parachute, suspension lines and paratrooper or load, along the trajectories of each pair of paratroopers or loads, thus taking into account the whole volume and allowing the quantification and the acquisition of a deeper understanding of the risks associated to the operation. In addition, the claimed invention may allow linking different risk level depending on the elements colliding. For instance, a collision risk between canopies can considered more acceptable than between paratroopers.

It is also an object of the present invention a system of aerial delivery by parachute from an aircraft comprising:

- a tracking equipment configured for tracking and recording element trajectories at several instants of a sample of elements delivered by parachute from the left side and from the right side of the aircraft,

- computer means configured for:

  - simulating pairs of the delivered trajectories from the recorded sample dispatched simultaneously from the left side and the right side of the aircraft,

  - defining at each instant of each trajectory a volume comprising the shape of the delivered element located over the trajectory, the parachute comprising a canopy and suspensions lines extending between the canopy and the element,

  - measuring at each instant of each trajectory the distance between the two defined volumes of the element trajectories from the left side and the right side of the aircraft,

  - identifying the number of cases where the two defined volumes intersect each other or a minimum distance between the two defined volumes which is smaller than a threshold compared to the total number of cases of a given representative sample of trajectories:

$$\% \, of \, Interactions = \frac{Pairs \, With \, Interactions}{Total \, Pairs} \cdot 100$$

  - providing a risk of interaction of aerial delivery by parachute from an aircraft by the number of intersections identified over the number of cases of the given representative sample of trajectories.

The invention provides an improvement with regards to the prior art and provides several advantages compared to the known methods and systems:

- The whole volume, paratrooper, suspension lines and parachute, along the trajectories is considered.
- Distances between any part of the volumes can be measured at any time allowing a breakdown analysis of any element and providing more accurate results with a high degree of fidelity.
- In case of interaction is detected, the element causing the interaction can be identified. For instance, interactions paratrooper-paratrooper, paratrooper-suspension lines, paratrooper-parachute, suspension lines-suspension lines, suspension lines - parachute, parachute - parachute.
- The analysis is conducted over the whole period of time where crossover can be an issue. This is, up to the moment the canopies are fully inflated.
- An exit time distribution of the jumps can be considered to better represent a real scenario.
- Additional interesting information such as the velocity and/or the energy of the paratroopers or loads, or the interactions, at each instant can be obtained.
- The effect of the different parameters involved in the phenomenon can be properly quantified and compared and issue an instruction to the aircraft to act on aircraft parameters and/or delivered element parameters to decrease the risk of interaction in-flight.
- Better understanding of the obtained results as they are percentages.
- It provides a new baseline reference of acceptability in terms of metric and methodology that can be used for future analyses/aircraft.

## Description of the figures

To complete the description and to provide for a better understanding of the invention, a set of drawings is provided. Said drawings form an integral part of the description and illustrate preferred embodiments of the invention. The drawings comprise the following figures.

Figure 1 shows a top view of a schematic representation of a centrelining effect on a body aircraft.

Figure 2 shows a 3D example of paratrooper trajectories converted into standardized reference axes system.

Figure 3 shows a schematic representation of an embodiment of a parachute system geometry.

Figure 4 shows a schematic representation of an embodiment of an example of volume trajectories definition.

## Detailed description of the invention

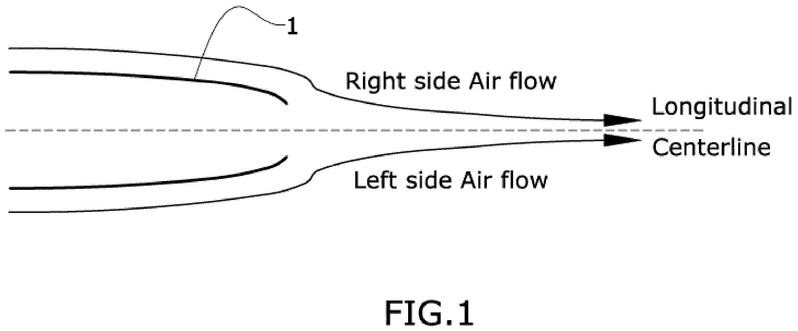

Figure 1 shows a top view of a schematic representation of a centrelining effect on a body aircraft (1). The element (10), load or paratrooper, dropped from the left side (2.1) of the aircraft (1) tends to move to the right side (2.2) after the delivery, and vice versa as shown by the arrows in figure 1. Figure 1 shows the aerodynamic flow around the fuselage of the aircraft (1) and its tendency to move towards the longitudinal centerline once the aircraft (1) has gone by.

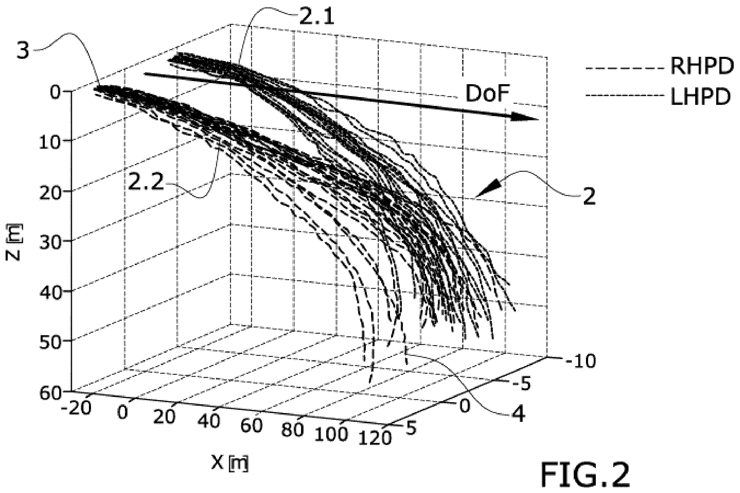

Figure 2 shows a 3D example of trajectories (2) of a paratrooper dropped from an aircraft (1). There are left side (2.1) trajectories (2) and right side (2.2) trajectories (2). The trajectories (2) are converted into an appropriate reference axes system, for instance, a standardized reference axes system before the simulation. The tracked trajectories (2) comprise a release instant (3) and at least an instant at which the trajectory becomes vertical (4) with respect to the ground.

Depending on the tracking equipment used to track and record the jumps of the paratroopers or the drops of loads, the obtained trajectories (2) will be referred to the corresponding reference axes associated to such tracking equipment. In an embodiment, an initial conversion to the following standardized axes shall be made:

o Origin: Fixed at the position in space of a certain reference point of the aircraft (1) at the jump, drop or, what is the same, the release instant in the left side (2.1) and right side (2.2).
o X axis: In the direction of the ground speed of the aircraft (1) at the release instant.
∘ Z axis: Pointing vertical downwards.
∘ Y axis: Making a right-handed coordinate system.

Such trajectories (2) shall at least cover from the release instant (3) until the "first vertical" instant (4) that normally happens between 4 and 6 seconds after the jump or drop. For some types of parachutes that are provided with elements that delay the inflation, timings can be slightly different. In other words, trajectories (2) shall be available within the whole period of time where the crossover phenomenon may occur.

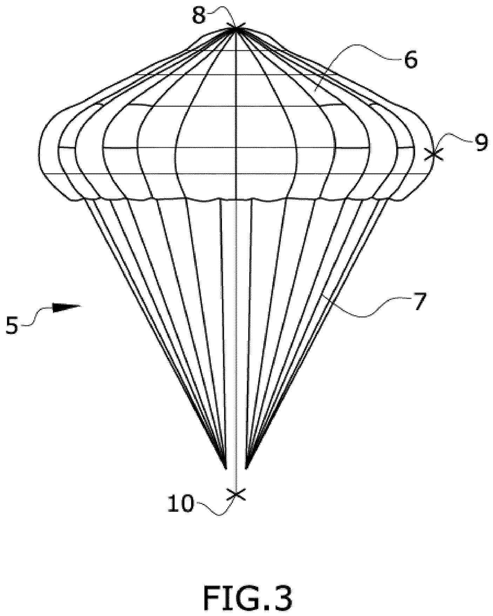

Figure 3 discloses a schematic representation of an embodiment of a parachute (5) system geometry. The parachute (5) comprises a canopy (6) and suspension lines (7) extending between the canopy (6) and the paratrooper or load (10). The center (8) of the canopy (6) (APEX) and the radius (9) of the canopy (6) at each instant are identified.

As previously stated, a system volume is defined. In an embodiment, at each of the performed jumps or drops the trajectories (2) with the volume defined by the position of the body of the paratrooper or the load (10) are represented.

The volume at each instant of the trajectory (2) can be defined through multiple ways. Using spheres, using a cone and a sphere, using cylinders. Whatever the definition, it is important that the volume is made by several different elements in order to allow the identification of which element is causing the interaction, and that it covers the whole system at all times.

Thus, the defined delivered volume comprises spheres or cones and spheres or cylinders together forming the shape of the canopy (6), the suspensions lines (7) and the element (10). Preferably, said defined delivered volume is covered by different and independent spheres or cones and spheres or cylinders forming the shape of the canopy (6), the suspensions lines (7) and the element (10) independently.

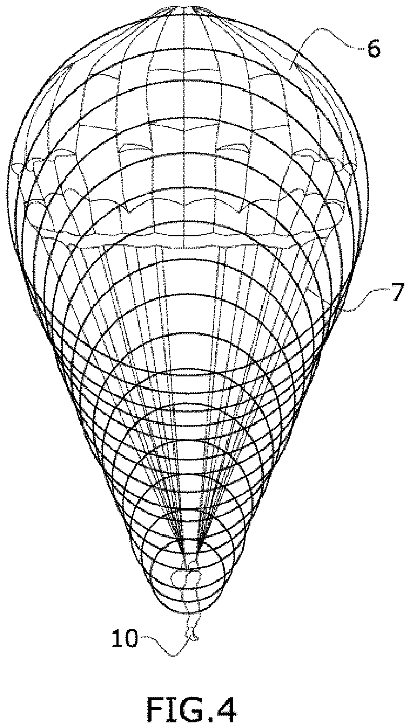

Figure 4 shows a schematic representation of an embodiment of an example of volume trajectories definition. A volume made by a total of sixteen spheres is defined. Some spheres were representing the volume of the canopy (6), others the volume of the suspension lines (7) and the last one the volume of the body of the paratrooper (10).

In order to reduce the noise on the samples of data trajectories (2) and to assure a proper evaluation of the parameters under study, only the trajectories (2) performed in similar conditions can be compared.

The criteria to decide whether two trajectories (2) are comparable or not shall be defined by the analyst for each particular analysis and according to the performance of the aircraft (1) under study, always taking into account the following parameters:

◦ Flight Conditions: Speed, Angle of Attack, Side slip and Altitude.
◦ Aircraft Configuration: Flaps, L/G and any other Aerial Delivery related equipment (i.e., version of the PTDP, position of the Air Deflectors, ...).
◦ Wind conditions: Wind is an uncontrollable factor that can have a significant effect on the obtained trajectories (i.e., high Drift angle values may introduce an offset on the starting point of the trajectories when converted into the standardized reference axes system) so a limit on the maximum differences between the wind conditions of two trajectories shall be defined to consider them as comparable.
◦ Any other variable under study: For example, S/L length, Engines Power ...

In-depth results breakdown:

o Exit Time distribution: In order to better represent a real scenario, an Exit Time distribution (typically it is considered a simultaneous jump those jumps performed within a delta time between doors of no more than ±0.5 seconds) shall be applied to the trajectories of each side to simulate jumps with a certain delay between them (i.e. ±0.1 s, ±0.2 s ...), thus step 4) shall be repeated for each of the simulated scenarios to obtain the variability of the crossover percentages with the time delay between jumps. In addition, the time at which crossover percentages are reduced to zero can be identified.

◦ Type of interaction identification: According to the definition of the volumes, step 4) shall be repeated for each of the combinations of interest between elements (like for example "Paratrooper to Paratrooper" and/or "Paratrooper to Suspension Lines or Parachute") to obtain the corresponding crossover percentages for such type of interaction.

◦ Sample size effect: In order to take into account, the size of the sample used for the analysis, a certain Confidence Level interval (typically 95%) for the proportion (in this case, crossover percentages) shall be applied to the obtained percentages, being the upper limit of such interval the value to be used as final results.

◦ Interactions characteristics: For each of the interactions identified in previous steps, the lateral velocity and energy with which the interaction occurs shall be calculated taking into account the trajectories of the paratroopers and their weight.

As an example of application, this methodology can be used for the certification of the Aerial Delivery Paratrooping Simultaneous Dispatch capability of an aircraft:

- At the early stages of the program, different analysis methodologies, like the S-Curves, can be used. However, none of such methodologies provided a clear understanding of the phenomenon or enough confidence on the comparison of the results between aircrafts due to the particularities of each method.

In an embodiment the method object of the invention further comprises the following steps:

- obtaining delivered trajectories (2) varying at least one aircraft flight parameters and/or delivered element (10) parameters,
- providing by the computer means a risk of interaction of aerial delivery by parachute (5) from an aircraft (1) by the number of intersections identified over the number of cases of the given representative sample of trajectories (2) for each parameter or combination of parameters.

As previously stated, flight parameters and delivered element (10) parameters are at least one of the following: aircraft speed, aircraft angle of attack, aircraft lifting devices configuration, side slip, altitude, length of static lines, kind of parachute or kind of parachute deployment bag.
The above allows that in-flight, the computer means is able to send instructions to the aircraft to vary at least one of the aircraft flight parameters to maintain the risk of interaction below a threshold.
The method may further comprise the step of the computer means creating a visual map of risk of interaction for every varied parameter.
The proposed method therefore creates an interaction risk map, according to both flight and technical parameters of the jump.

For this, trajectories would be obtained by sweeping several flight parameters (e.g., speed, angle of attack, flap configuration...), as well as those associated with the parachute (types of parachutes or bags, length of static lines...).
In this way, for instance, for each combination of parameters a color could be assigned according to the risk of interaction and this information can be used to build visual maps for the use of the flight crew.
This would allow to consult the maps in real time, and to adjust, as much as possible both operationally and tactically, the parameters of the delivery (e.g., lower speed, change flap configuration...).
The development of the claimed method also allows to:

  ◦ Obtain a deep understanding of the crossover phenomenon.
  ◦ Establish a baseline reference for comparison by means of doing equivalent tests on different aircraft.
  ◦ Define and agree with the certification authorities a clear pass/fail criteria.
  ◦ Certify the Paratrooping Simultaneous capability up to the maximum expected capacity in compliance with the contractual requirements and satisfying the customer expectations.

## Claims

1.  Method of aerial delivery by parachute (5) from an aircraft (1), the aircraft (1) comprising a right side and a left side, the method comprising the following steps:

    - tracking and recording by a tracking equipment element trajectories (2) at several instants of a sample of elements (10) delivered by parachute from the left side (2.1) and from the right side (2.2) of the aircraft (1),
    - simulating in a computer means pairs of the delivered trajectories (2) from the recorded sample dispatched simultaneously from the left side (2.1) and the right side (2.2) of the aircraft (1),
    - defining in the computer means at each instant of each trajectory (2) a delivered volume comprising the shape of the delivered element (10) located over the trajectory (2), the parachute (5) comprising a canopy (6) and suspensions lines (7) extending between the canopy (6) and the delivered element (10),
    - measuring in the computer means at each instant of each trajectory (2) the distance between the two defined volumes of the element (10) trajectories (2) from the left side (2.1) and the right side (2.2) of the aircraft (1),
    - identifying in the computer means the number of cases where the two defined volumes intersect each other or a minimum distance between the two defined volumes which is smaller than a threshold compared to the total number of cases of a given representative sample of trajectories (2):

    $$\% \ of \ Interactions = \frac{Pairs \ With \ Interactions}{Total \ Pairs} \cdot 100$$

    - the computer means providing a risk of interaction of aerial delivery by parachute (5) from an aircraft (1) by the number of intersections identified over the number of cases of the given representative sample of trajectories (2).

2.  **Method** of aerial delivery by parachute (5) from an aircraft (1), according to claim 1, wherein the tracked trajectories (2) comprise a release instant (3) and at least an instant at which the trajectory (2) becomes vertical (4) with respect to ground.

3.  Method of aerial delivery by parachute (5) from an aircraft (1), according to claim 2, wherein before simulating in a computer means the pairs of delivered trajectories (2), the trajectories (2) are converted into a reference axes system.

4.  Method of aerial delivery by parachute (5) from an aircraft (1), according to claim 3, wherein the reference axes system comprises:

    o an origin of the trajectory (2), at a reference point of the aircraft (1) left side (2.1) and right side (2.2) at the release instant (3),
    o an X axis in the direction of the ground speed of the aircraft (1) at the release instant (3),
    o a Z axis pointing vertical downwards,
    o a Y axis making a right-handed coordinate system.

5.  Method of aerial delivery by parachute (5) from an aircraft (1), according to any preceding claim, wherein the tracking equipment are kine-theodolites located on ground or position devices installed on the element (10) or cameras located on the aircraft (1).

6. Method of aerial delivery by parachute (5) from an aircraft (1), according to any preceding claim, wherein the defined delivered volume comprises spheres or cones and spheres or cylinders together forming the shape of the canopy (6), the suspensions lines (7) and the element (10).

7. Method of aerial delivery by parachute (5) from an aircraft (1), according to claim 6, wherein the defined delivered volume is covered by different and independent spheres or cones and spheres or cylinders forming the shape of the canopy (6), the suspensions lines (7) and the element (10) independently.

8. Method of aerial delivery by parachute (5) from an aircraft (1), according to any preceding claim, wherein the element (10) tracked trajectories (2) are taken in comparable circumstances: flight conditions and/or aircraft (1) configuration and/or wind conditions and/or engines power.

9. Method of aerial delivery by parachute (5) from an aircraft (1), according to any preceding claim, wherein the elements (10) delivered are a load and/or a paratrooper.

10. Method of aerial delivery by parachute (5) from an aircraft (1), according to any preceding claim, wherein it further comprises the following steps:

- obtaining delivered trajectories (2) varying at least one aircraft flight parameters and/or delivered element (10) parameters,
- providing by the computer means a risk of interaction of aerial delivery by parachute (5) from an aircraft (1) by the number of intersections identified over the number of cases of the given representative sample of trajectories (2) for each parameter or combination of parameters.

11. Method of aerial delivery by parachute (5) from an aircraft (1), according to claim 10, wherein it further comprises the step of, in-flight, the computer means sending instructions to the aircraft to vary at least one of the aircraft flight parameters to maintain the risk of interaction below a threshold.

12. Method of aerial delivery by parachute (5) from an aircraft (1), according to claims 10 or 11, wherein the flight parameters and delivered element (10) parameters are at least one of the following: aircraft speed, aircraft angle of attack, aircraft lifting devices configuration, side slip, altitude, length of static lines, kind of parachute or kind of parachute deployment bag.

13. Method of aerial delivery by parachute (5) from an aircraft (1), according to any preceding claim 10 to 12, wherein it further comprises the step of the computer means creating a visual map of risk of interaction for every varied parameter.

14. System of aerial delivery by parachute (5) from an aircraft (1), the aircraft (1) comprising a right side and a left side, the system comprising:

- a tracking equipment configured for tracking and recording element trajectories (2) at several instants of a sample of elements (10) delivered by parachute from the left side (2.1) and from the right side (2.2) of the aircraft (1),
- wherein the system is **characterised in that** it comprises computer means configured for:

- simulating pairs of the delivered trajectories (2) from the recorded sample dispatched simultaneously from the left side (2.1) and the right side (2.2) of the aircraft (1),
- defining at each instant of each trajectory (2) a volume comprising the shape of the delivered element (10) located over the trajectory (2), the parachute (5) comprising a canopy (6) and suspensions lines (7) extending between the canopy (6) and the element (10),
- measuring at each instant of each trajectory (2) the distance between the two defined volumes of the element (10) trajectories (2) from the left side (2.1) and the right side (2.2) of the aircraft (1),
- identifying the number of cases where the two defined volumes intersect each other or a minimum distance between the two defined volumes which is smaller than a threshold compared to the total number of cases of a given representative sample of trajectories (2):

$$\% \ of \ Interactions = \frac{Pairs \ With \ Interactions}{Total \ Pairs} \cdot 100$$

- providing a risk of interaction of aerial delivery by parachute (5) from an aircraft (1) by the number of intersections identified over the number of cases of the given representative sample of trajectories (2).

**Patentansprüche**

1.  Verfahren zur Luftablieferung durch Fallschirm (5) von einem Flugzeug (1) aus, wobei das Flugzeug (1) eine rechte Seite und eine linke Seite umfasst, wobei das Verfahren die folgenden Schritte umfasst:

    Verfolgen und Aufzeichnen durch eine Verfolgungsausrüstung von Elementtrajektorien (2) zu mehreren Zeitpunkten einer Probe von Elementen (10), die per Fallschirm von der linken Seite (2.1) und von der rechten Seite (2.2) des Flugzeugs (1) abgeliefert werden,
    Simulieren in einem Computermittel von Paaren der abgelieferten Trajektorien (2) aus der aufgezeichneten Probe, die gleichzeitig von der linken Seite (2.1) und der rechten Seite (2.2) des Flugzeugs (1) abgesetzt werden,
    Definieren in dem Computermittel zu jedem Zeitpunkt jeder Trajektorie (2) eines abgelieferten Volumens, das die Form des abgelieferten Elements (10) umfasst, das sich über der Trajektorie (2) befindet, wobei der Fallschirm (5) eine Kappe (6) und Fangleinen (7) umfasst, die sich zwischen der Kappe (6) und dem abgelieferten Element (10) erstrecken,
    Messen in dem Computermittel zu jedem Zeitpunkt jeder Trajektorie (2) des Abstands zwischen den beiden definierten Volumen der Trajektorien (2) des Elements (10) von der linken Seite (2.1) und der rechten Seite (2.2) des Flugzeugs (1),
    Identifizieren in dem Computermittel der Anzahl der Fälle, in denen sich die beiden definierten Volumen schneiden oder ein Mindestabstand zwischen den beiden definierten Volumen kleiner als ein Schwellenwert ist, im Vergleich zur Gesamtzahl der Fälle einer gegebenen repräsentativen Probe von Trajektorien (2):

    $$\% \ der \ Interaktionen = \frac{Paare \ mit \ Interaktionen}{Gesamtzahl \ der \ Paare} \cdot 100$$

    das Computermittel ein Interaktionsrisiko der Luftablieferung durch Fallschirm (5) von einem Flugzeug (1) aus durch die Anzahl der identifizierten Schnittpunkte über die Anzahl der Fälle der gegebenen repräsentativen Probe von Trajektorien (2) bereitstellt.

2.  Verfahren zur Luftablieferung durch Fallschirm (5) von einem Flugzeug (1) aus, nach Anspruch 1, wobei die verfolgten Trajektorien (2) einen Freigabezeitpunkt (3) und wenigstens einen Zeitpunkt umfassen, zu dem die Trajektorie (2) vertikal (4) in Bezug auf den Boden wird.

3.  Verfahren zur Luftablieferung durch Fallschirm (5) von einem Flugzeug (1) aus, nach Anspruch 2, wobei vor dem Simulieren der Paare von abgelieferten Trajektorien (2) in einem Computermittel die Trajektorien (2) in ein Referenzachsensystem umgewandelt werden.

4.  Verfahren zur Luftablieferung durch Fallschirm (5) von einem Flugzeug (1) aus, nach Anspruch 3, wobei das Referenzachsensystem umfasst:

    o einen Ursprung der Trajektorie (2), an einem Referenzpunkt der linken Seite (2.1) und der rechten Seite (2.2) des Flugzeugs (1) zum Freigabezeitpunkt (3),
    o eine X-Achse in Richtung der Geschwindigkeit über Grund des Flugzeugs (1) zum Freigabezeitpunkt (3),
    o eine Z-Achse, die vertikal nach unten zeigt,
    o eine Y-Achse, die ein rechtshändiges Koordinatensystem bildet.

5.  Verfahren zur Luftablieferung durch Fallschirm (5) von einem Flugzeug (1) aus, nach einem der vorhergehenden Ansprüche, wobei die Verfolgungsausrüstung Kinetheodolite, die sich am Boden befinden, oder Positionsvorrichtungen, die am Element (10) installiert sind, oder Kameras, die sich am Flugzeug (1) befinden, sind.

6.  Verfahren zur Luftablieferung durch Fallschirm (5) von einem Flugzeug (1) aus, nach einem der vorhergehenden Ansprüche, wobei das definierte abgelieferte Volumen Kugeln oder Kegel und Kugeln oder Zylinder umfasst, die zusammen die Form der Kappe (6), der Fangleinen (7) und des Elements (10) bilden.

7. Verfahren zur Luftablieferung durch Fallschirm (5) von einem Flugzeug (1) aus, nach Anspruch 6, wobei das definierte abgelieferte Volumen von unterschiedlichen und unabhängigen Kugeln oder Kegeln und Kugeln oder Zylindern abgedeckt wird, die unabhängig voneinander die Form der Kappe (6), der Fangleinen (7) und des Elements (10) bilden.

8. Verfahren zur Luftablieferung durch Fallschirm (5) von einem Flugzeug (1) aus, nach einem der vorhergehenden Ansprüche, wobei die verfolgten Trajektorien (2) des Elements (10) unter vergleichbaren Umständen aufgenommen werden: Flugbedingungen und/oder Flugzeug- (1) Konfiguration und/oder Windbedingungen und/oder Triebwerksleistung.

9. Verfahren zur Luftablieferung durch Fallschirm (5) von einem Flugzeug (1) aus, nach einem der vorhergehenden Ansprüche, wobei die abgelieferten Elemente (10) eine Last und/oder ein Fallschirmjäger sind.

10. Verfahren zur Luftablieferung durch Fallschirm (5) von einem Flugzeug (1) aus, nach einem der vorhergehenden Ansprüche, wobei es ferner die folgenden Schritte umfasst:

Erhalten von abgelieferten Trajektorien (2) durch Variieren wenigstens eines Flugparameters des Flugzeugs und/oder Parameters des abgelieferten Elements (10),
Bereitstellen durch das Computermittel eines Interaktionsrisikos der Luftablieferung durch Fallschirm (5) von einem Flugzeug (1) aus durch die Anzahl der identifizierten Schnittpunkte über die Anzahl der Fälle der gegebenen repräsentativen Probe von Trajektorien (2) für jeden Parameter oder jede Kombination von Parametern.

11. Verfahren zur Luftablieferung durch Fallschirm (5) von einem Flugzeug (1) aus, nach Anspruch 10, wobei es ferner den Schritt umfasst, dass das Computermittel während des Fluges Anweisungen an das Flugzeug sendet, um wenigstens einen der Flugparameter des Flugzeugs zu variieren, um das Interaktionsrisiko unter einem Schwellenwert zu halten.

12. Verfahren zur Luftablieferung durch Fallschirm (5) von einem Flugzeug (1) aus, nach den Ansprüchen 10 oder 11, wobei die Flugparameter und Parameter des abgelieferten Elements (10) wenigstens einer der folgenden sind: Flugzeuggeschwindigkeit, Anstellwinkel des Flugzeugs, Konfiguration der Auftriebsvorrichtungen des Flugzeugs, Seitenschlupf, Flughöhe, Länge der statischen Leinen, Art des Fallschirms oder Art des Fallschirm-Entfaltungssacks.

13. Verfahren zur Luftablieferung durch Fallschirm (5) von einem Flugzeug (1) aus, nach einem der vorhergehenden Ansprüche 10 bis 12, wobei es ferner den Schritt umfasst, dass das Computermittel eine visuelle Karte des Interaktionsrisikos für jeden variierten Parameter erstellt.

14. System zur Luftablieferung durch Fallschirm (5) von einem Flugzeug (1) aus, wobei das Flugzeug (1) eine rechte Seite und eine linke Seite umfasst, wobei das System umfasst:

eine Verfolgungsausrüstung, die zum Verfolgen und Aufzeichnen von Elementtrajektorien (2) zu mehreren Zeitpunkten einer Probe von Elementen (10) konfiguriert ist, die per Fallschirm von der linken Seite (2.1) und von der rechten Seite (2.2) des Flugzeugs (1) abgeliefert werden,
wobei das System **dadurch gekennzeichnet ist, dass** es Computermittel umfasst, die konfiguriert sind zum:

Simulieren von Paaren der abgelieferten Trajektorien (2) aus der aufgezeichneten Probe, die gleichzeitig von der linken Seite (2.1) und der rechten Seite (2.2) des Flugzeugs (1) abgesetzt werden,
Definieren zu jedem Zeitpunkt jeder Trajektorie (2) eines Volumens, das die Form des abgelieferten Elements (10) umfasst, das sich über der Trajektorie (2) befindet, wobei der Fallschirm (5) eine Kappe (6) und Fangleinen (7) umfasst, die sich zwischen der Kappe (6) und dem Element (10) erstrecken,
Messen zu jedem Zeitpunkt jeder Trajektorie (2) des Abstands zwischen den beiden definierten Volumen der Trajektorien (2) des Elements (10) von der linken Seite (2.1) und der rechten Seite (2.2) des Flugzeugs (1),
Identifizieren der Anzahl der Fälle, in denen sich die beiden definierten Volumen schneiden oder ein Mindestabstand zwischen den beiden definierten Volumen kleiner als ein Schwellenwert ist, im Vergleich zur Gesamtzahl der Fälle einer gegebenen repräsentativen Probe von Trajektorien (2):

$$\% \ der \ Interaktionen = \frac{Paare \ mit \ Interaktionen}{Gesamtzahl \ der \ Paare} \cdot 100$$

Bereitstellen eines Interaktionsrisikos der Luftablieferung durch Fallschirm (5) von einem Flugzeug (1) aus durch die Anzahl der identifizierten Schnittpunkte über die Anzahl der Fälle der gegebenen repräsentativen Probe von Trajektorien (2).

**Revendications**

1.  Procédé de livraison aérienne par parachute (5) à partir d'un aéronef (1), l'aéronef (1) comprenant un côté droit et un côté gauche, le procédé comprenant les étapes suivantes :

    - le suivi et l'enregistrement par un équipement de suivi des trajectoires des éléments (2) à plusieurs instants d'un échantillon d'éléments (10) livrés par parachute depuis le côté gauche (2.1) et depuis le côté droit (2.2) de l'aéronef (1),
    - la simulation dans un moyen informatique de paires de trajectoires fournies (2) à partir de l'échantillon enregistré envoyé simultanément depuis le côté gauche (2.1) et le côté droit (2.2) de l'aéronef (1),
    - la définition dans le moyen informatique à chaque instant de chaque trajectoire (2) d'un volume fourni comprenant la forme de l'élément livré (10) situé au-dessus de la trajectoire (2), le parachute (5) comprenant une voilure (6) et des suspentes (7) s'étendant entre la voilure (6) et l'élément livré (10),
    - la mesure dans le moyen informatique à chaque instant de chaque trajectoire (2) de la distance entre les deux volumes définis des trajectoires (2) des éléments (10) depuis le côté gauche (2.1) et le côté droit (2.2) de l'aéronef (1),
    - l'identification dans le moyen informatique du nombre de cas où les deux volumes définis se croisent ou d'une distance minimale entre les deux volumes définis qui est inférieure à un seuil par rapport au nombre total de cas d'un échantillon représentatif donné de trajectoires (2) :

    $$\% \ d'interactions = \frac{Paires \ avec \ interactions}{Nombre \ total \ de \ paires} \cdot 100$$

    - le moyen informatique fournissant un risque d'interaction de livraison aérienne par parachute (5) à partir d'un aéronef (1) par le nombre d'intersections identifiées sur le nombre de cas de l'échantillon représentatif donné de trajectoires (2).

2.  Procédé de livraison aérienne par parachute (5) à partir d'un aéronef (1) selon la revendication 1, dans lequel les trajectoires suivies (2) comprennent un instant de largage (3) et au moins un instant auquel la trajectoire (2) devient verticale (4) par rapport au sol.

3.  Procédé de livraison aérienne par parachute (5) à partir d'un aéronef (1) selon la revendication 2, dans lequel avant de simuler dans un moyen informatique les paires de trajectoires fournies (2), les trajectoires (2) sont converties en un système d'axes de référence.

4.  Procédé de livraison aérienne par parachute (5) à partir d'un aéronef (1) selon la revendication 3, dans lequel le système d'axes de référence comprend :

    o une origine de la trajectoire (2), à un point de référence de l'aéronef (1) côté gauche (2.1) et côté droit (2.2) à l'instant de largage (3),
    o un axe X dans la direction de la vitesse au sol de l'aéronef (1) à l'instant de largage (3),
    o un axe Z pointant verticalement vers le bas,
    o un axe Y formant un système de coordonnées main droite.

5.  Procédé de livraison aérienne par parachute (5) à partir d'un aéronef (1) selon une quelconque revendication précédente, dans lequel les équipements de suivi sont des kiné-théodolites situés au sol ou des dispositifs de positionnement installés sur l'élément (10) ou des caméras situées sur l'aéronef (1).

6.  Procédé de livraison aérienne par parachute (5) à partir d'un aéronef (1) selon une quelconque revendication précédente, dans lequel le volume défini fourni comprend des sphères ou des cônes et des sphères ou des cylindres formant ensemble la forme de la voilure (6), des suspentes (7) et de l'élément (10).

7. Procédé de livraison aérienne par parachute (5) à partir d'un aéronef (1) selon la revendication 6, dans lequel le volume défini fourni est recouvert par des sphères ou des cônes différents et indépendants et des sphères ou des cylindres formant indépendamment la forme de la voilure (6), des suspentes (7) et de l'élément (10).

8. Procédé de livraison aérienne par parachute (5) à partir d'un aéronef (1) selon une quelconque revendication précédente, dans lequel les trajectoires suivies (2) de l'élément (10) sont prises dans des circonstances comparables : conditions de vol et/ou configuration de l'aéronef (1) et/ou conditions de vent et/ou puissance des moteurs.

9. Procédé de livraison aérienne par parachute (5) à partir d'un aéronef (1) selon une quelconque revendication précédente, dans lequel les éléments (10) livrés sont une charge et/ou un parachutiste.

10. Procédé de livraison aérienne par parachute (5) à partir d'un aéronef (1) selon une quelconque revendication précédente, dans lequel il comprend en outre les étapes suivantes :

   - l'obtention de trajectoires fournies (2) faisant varier au moins un paramètre de vol de l'aéronef et/ou des paramètres de l'élément livré (10),
   - la fourniture par le moyen informatique d'un risque d'interaction de livraison aérienne par parachute (5) à partir d'un aéronef (1) par le nombre d'intersections identifiées sur le nombre de cas de l'échantillon représentatif donné de trajectoires (2) pour chaque paramètre ou combinaison de paramètres.

11. Procédé de livraison aérienne par parachute (5) à partir d'un aéronef (1) selon la revendication 10, dans lequel il comprend en outre l'étape d'envoi, en vol, par le moyen informatique d'instructions à l'aéronef pour faire varier au moins un des paramètres de vol de l'aéronef afin de maintenir le risque d'interaction en dessous d'un seuil.

12. Procédé de livraison aérienne par parachute (5) à partir d'un aéronef (1) selon les revendications 10 ou 11, dans lequel les paramètres de vol et les paramètres de l'élément livré (10) sont au moins l'un des suivants : vitesse de l'aéronef, angle d'attaque de l'aéronef, configuration des dispositifs de portance de l'aéronef, glissade, altitude, longueur des lignes statiques, type de parachute ou type de sac de déploiement de parachute.

13. Procédé de livraison aérienne par parachute (5) à partir d'un aéronef (1) selon une quelconque revendication précédente 10 à 12, dans lequel il comprend en outre l'étape de création par le moyen informatique d'une carte visuelle de risque d'interaction pour chaque paramètre varié.

14. Système de livraison aérienne par parachute (5) à partir d'un aéronef (1), l'aéronef (1) comprenant un côté droit et un côté gauche, le système comprenant :

   - un équipement de suivi configuré pour suivre et enregistrer des trajectoires des éléments (2) à plusieurs instants d'un échantillon d'éléments (10) livrés par parachute depuis le côté gauche (2.1) et depuis le côté droit (2.2) de l'aéronef (1),
   - dans lequel le système est **caractérisé en ce qu'**il comprend un moyen informatique configuré pour :
   - simuler des paires de trajectoires fournies (2) à partir de l'échantillon enregistré envoyé simultanément depuis le côté gauche (2.1) et le côté droit (2.2) de l'aéronef (1),
   - définir à chaque instant de chaque trajectoire (2) un volume comprenant la forme de l'élément livré (10) situé au-dessus de la trajectoire (2), le parachute (5) comprenant une voilure (6) et des suspentes (7) s'étendant entre la voilure (6) et l'élément (10),
   - mesurer à chaque instant de chaque trajectoire (2) la distance entre les deux volumes définis des trajectoires (2) des éléments (10) depuis le côté gauche (2.1) et le côté droit (2.2) de l'aéronef (1),
   - identifier le nombre de cas où les deux volumes définis se croisent ou une distance minimale entre les deux volumes définis qui est inférieure à un seuil par rapport au nombre total de cas d'un échantillon représentatif donné de trajectoires (2) :

$$\% \; d'interactions = \frac{Paires \; avec \; interactions}{Nombre \; total \; de \; paires} \cdot 100$$

   - fournir un risque d'interaction de livraison aérienne par parachute (5) à partir d'un aéronef (1) par le nombre d'intersections identifiées sur le nombre de cas de l'échantillon représentatif donné de trajectoires (2).

Right side Air flow

Left side Air flow

Longitudinal

Centerline

FIG.1

EP 4 467 452 B1

FIG.2

FIG.3

**EP 4 467 452 B1**

FIG.4